Europäisches Patentamt

(19) European Patent Office

Office européen des brevets

(11) Publication number: **0 038 709**
A1

(12) **EUROPEAN PATENT APPLICATION**

(21) Application number: **81301753.0**

(22) Date of filing: **21.04.81**

(51) Int. Cl.³: **A 01 G 31/02**

(30) Priority: **21.04.80 GB 8013045**

(43) Date of publication of application:
**28.10.81 Bulletin 81/43**

(84) Designated Contracting States:
**AT BE CH DE FR IT LI LU NL SE**

(71) Applicant: **NUTRIENT FILM TECHNOLOGY LIMITED**
**Hook Lane Aldingbourne**
**Chichester West Sussex(GB)**

(72) Inventor: **Edwards, Cyril Kenneth**
**27 Michel Grove East Preston**
**Littlehampton West Sussex(GB)**

(74) Representative: **Hildyard, Edward Martin et al,**
**Frank B. Dehn & Co. 39 Old Steine**
**Brighton BN1 1NH(GB)**

(54) **Gully for hydroponic cultivation.**

(57) A gully, for hydroponic plant cultivation, of flexible sheet material shaped to form a base (1) and side members (3) to constrain a nutrient solution with which, in use, the roots of the plants come into contact, comprises at least one of said base or side members is longitudinally rolled, creased or folded into a tubular or part-tubular configuration which may be progressively unrolled as the plants grow to increase the width of said base and/or the height of said side members.

The gully, *inter alia,* effectively centralises nutrient solution during the early stages of plant growth, serves to provide gentle physical support for the plants and prevents excessive evaporation of the nutrient solution from the roots.

A method of hydroponic plant cultivation and a guide for the production of the gully here concerned are also described.

*FIG.1*

"Gully for hydroponic cultivation"

This invention concerns a gully for hydroponic cultivation, a method for its use and apparatus for its production.

It is becoming increasingly popular to cultivate plants by hydroponic methods, especially a hydroponic method generally known as the nutrient film technique. In using this technique, the roots of the plants rest in gullies which are irrigated, generally continuously, with a nutrient solution (see British Patent Specification No. 1,245,581). Unlike conventional hydroponic techniques, there need be no growing medium and this results in substantial savings in cost and space. The composition and temperature of the nutrient solution can be closely controlled to ensure optimum conditions for the particular crop being cultivated. Apart from glasshouse cultivation, the technique is also applicable to crop production on barren ground and ground unsuitable for conventional cultivation such as desert or salt marshes and the technique promises to be of great value in those countries where agricultural land of adequate quality is in short supply.

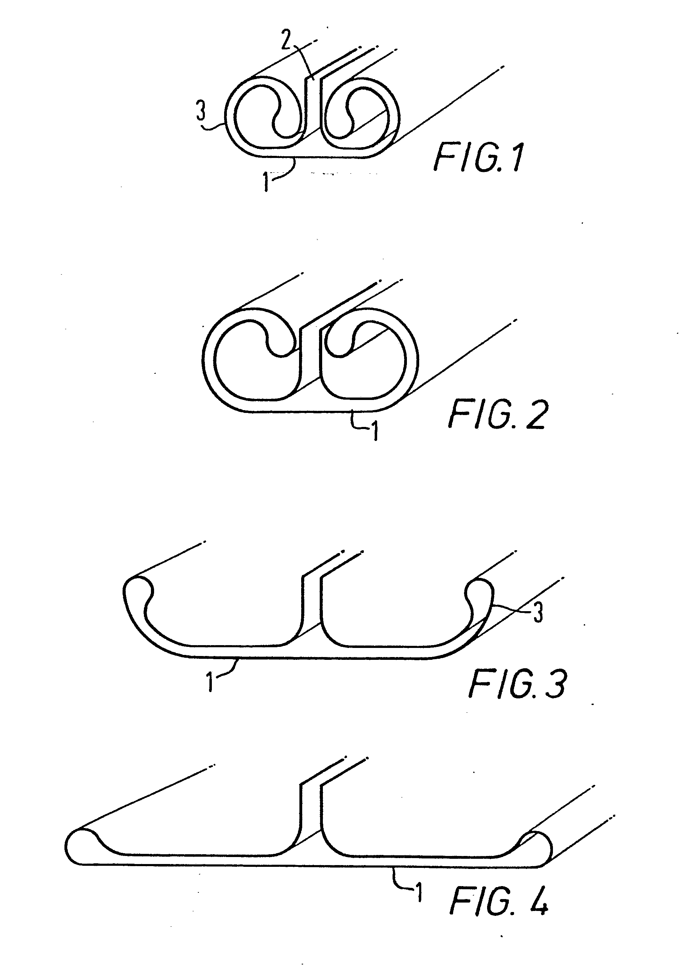

A gully for use in hydroponic cultivation has commonly been formed from black or black and white pigmented plastics sheeting, the edges of the sheeting being folded back towards the centre of the gully to leave a slot through which the stems of the plants emerge. Conventional gullies of this type are shown, for example, in British Patent Specifications Nos. 1,545,273/4/5/6. A typical such gully is illustrated in Figure 4 of the drawings accompanying this specification.

Gullies of this type have a number of disadvantages, as follows:-

(a)  The width of the gully is normally fixed, and is dimensioned to be capable of containing the root structures of fully developed plants.  This width is far greater than that required for the root structure of young plants or seedlings.  Because the base is so wide it is, in practice, extremely difficult to ensure that the nutrient stream follows a path close to the centre line of the gully, and hence to ensure (without the use of capillary matting, which is relatively costly) that it will make contact with the small root systems of each of the young plants or seedlings.  There is therefore a risk that some plants will be starved of nutrient solution or even become completely dehydrated.

(b)  It is very difficult to provide small plants or seedlings with the gentle physical support they need to keep them upright in the gully.  Conventionally the plants which are going to be planted out in gullies are initially grown in some form of container or root support medium as an aid  to stabilising them when they are first planted out in the gully.

(c)  It is difficult to keep the gully sufficiently closed along its entire length.  Consequently the nutrient solution in the gully is exposed to excessive evaporation, which not only wastes water and creates humidity but also exerts a considerable cooling effect on the nutrient solution, leading to excessive use of energy when the solution is heated and unwanted temperature gradients along the gully.

(d)  Conventional gullies made from plastics sheeting have little longitudinal rigidity and hence are unable to bridge local depressions in the substrate or supporting members on which they rest.  Thus they tend to sag into such depressions, causing an undesirable variation in the depth of liquid in the gully.

The present invention is based on the discovery that the above problems may be overcome or mitigated by the provision of a gully shaped to form a base and side members in which the width of the base and/or the height of the side members may be progressively increased as the plants grow.

Thus according to the invention we provide a gully for hydroponic plant cultivation, of flexible sheet material shaped to form a base and side members to constrain a nutrient solution with which, in use, the roots of the plants come into contact, characterised in that

at least one of said base or side members is longitudinally rolled, creased or folded into a tubular or part tubular configuration which may be progressively unrolled as the plants grow to increase the width of said base and/or the height of said side members.

The gully of the present invention may thus take any configuration which in use allows progressive unrolling of one or both base and/or side members as the plants grow such that the width of the base and/or the height of said side members is increased. Thus, for example, in one embodiment of the present invention at least one of said base members is longitudinally rolled or creased into a tubular or part-tubular configuration such that in use plants are supported by the said side members.

Thus, for example, the gully may be formed by folding the two edges of a strip of flexible sheet material to meet in the centre, thus forming a narrower strip of double thickness, and then rolling or creasing

- 4 -

at least one edge of said narrower strip upwardly into a tubular or part tubular configuration. In this embodiment the plants are supported by the edge portion of the original strip, which preferably abut and project upwardly along a central axis. The natural resilience of the sheet material supported by the tubular members then provides effective but gentle support for the plants. Such an embodiment can have sufficient stability to support seedlings. Advantageously at least one of said base members, preferably both, is/are longitudinally rolled or creased upwardly.

In the above-mentioned embodiments, if desired, at least one of said side members may be longitudinally rolled or creased into a tubular or part-tubular configuration.

In an alternative embodiment of the present invention, suitable for suspension above the ground, at least one of the said side members is rolled or creased into a tubular or part-tubular configuration, the edges of the flexible sheet material being secured to a substantially rigid member for suspension above the ground. In such an embodiment, in use, the side member(s) may be progressively unrolled as the plants grow to increase the height of the side members.

Although some of the advantages of the invention can be realised by rolling or creasing one of the side members, it is preferred to maintain the gully in a symmetrical configuration by rolling or creasing both side members.

In a further embodiment of the present invention both of said side members are longitudinally rolled or creased into a tubular configuration, such that in use portions of each of said side members bear against and support the plants.

The side members may be rolled or creased upwardly or downwardly. In this embodiment the free edges of the flexible sheet material of the gully become an integral part of the tubular configuration.

It is preferred to roll rather than crease the side members, since it is then possible to select the ideal diameter and tightness of roll independently to meet the needs of particular plants at particular stages of development. A tubular configuration of small diameter, obtained by rolling the side members through a number of revolutions, generates a gully suitable for short plants, while larger diameter tubes or partial tubes comprising less than one complete revolution, provide a gully suitable for taller plants. It will be appreciated that the tubular or part-tubular configuration(s) of the gully need not be of uniform cross-section along the length of the gully. Thus the diameter of the tubular or part-tubular configuration may, if desired, vary from point to point along the length of the tube. Thus for example the tubular or part-tubular configuration may taper from one end to the other of the gully. A gully having a tubular or part tubular configuration of varying diameter may of course be formed by varying the tightness of the rolling or creasing of side and/or base members along its length so as to obtain the desired variation in diameter. The tubular portions can if desired be held in a partially flattened state.

Clips may be attached to the free edges of the sheet material, for tying to supporting strings for crops that require supporting.

In a further embodiment of the present invention the configuration of the gully may be adapted to receive heating or cooling means, e.g. pipes, which in use serve to heat or cool the nutrient solution and/or plant roots. Thus for example the configuration of the gully may be adapted to receive heating or cooling pipes within or between the tubular or part tubular configurations formed by longitudinal rolling, creasing or folding of the said side members. In use such a configuration provides a heat exchanger with a large surface area insulated from the aerial environment. Where the heating or cooling pipes are positioned between the tubular or part tubular configurations and/or inside the channel of the gully, the rolled or creased base members may serve to centralise the flow of nutrient and insulate the channel from undue heat loss. If desired the pipes may be integral with the gully, formed for example by heat sealing a longitudinal section of the gully or the pipes may be separate, for example lay-flat tubing. The heating or cooling pipes may, also if desired be external to the gully of the present invention, the configuration of the gully being such as to accommodate the external piping. The heat source may, for example be water or hot air carrying low-grade heat. If desired solar heating or flue gases could be used.

In a further embodiment according to the present invention the configuration of the gully may be such as to provide a reservoir for the nutrient solution, for example between the tubular or part-tubular configurations formed by longitudinal rolling, creasing or folding of the said side members. Such a reservoir allows the gully to be used without continuous re-circulation of solution.

According to a further feature of the present invention there is provided apparatus for the production of a gully as hereinbefore defined which comprises a guide or guides through which in use flexible sheet material may be drawn, to progressively conform the flexible sheet material into the configuration of a gully as hereinbefore defined.

Thus the desired configuration for the gully can be obtained by passing the sheet from which the gully is formed through suitably shaped guides. Thus, for example, in the embodiment where the free edges of the sheet material are not an integral part of the rolled or creased side members, the first effect of the guiding device is to fold the free edges of the sheet material towards the centre. Further guides then cause the side members to be rolled or creased upwardly into a tubular or part tubular configuration. Thus by drawing the original strip of sheet material through the guide members, a gully of the desired configuration is produced, having a constant cross-section along its length.

Once the gully has been formed with tubular side members, there are many ways of retaining this form. For instance a simple retaining strip can be passed round the gully at intervals along its length. This retaining strip can be of adjustable length if so required, enabling the configuration of the gully to be adjusted. Alternatively the two side members may be held together by an adhesive strip.

Alternatively an elongated covering can be placed over the gully, which may also serve as a clamping member for the tubular portions, having cross slits or apertures at each plant position. Such a covering also provides a heat shield and rain shield, giving additional thermal insulation to the nutrient solution in the channel.

The gully of this invention has numerous operational advantages, including the following:-

(a) The width of the channel is reduced and the flow of nutrient solution is effectively centralised during the early stages of plant growth. There is no need for a gully support channel, and slight sideways sloping of the gully is less detrimental.

(b) The free edges of the sheet material can be supported by the side members and can then provide gentle physical support for the plants. The amount of support can be controlled to be such that it is adequate to keep the plants upright in the channel and yet impose no restriction on their growth.

(c) The gentle pressure which the tubular side members can exert on the free edges keeps said edges substantially together except while the stem of a plant or a root support system holds them locally apart. Hence excessive evaporation of the nutrient solution is prevented while adequate ventilation is allowed to ensure that there is no accumulation of noxious gases in the channel. The ingress of rain water is also substantially reduced.

(d)   The rolled side members, consisting of several layers of pliable material separated by air spaces, provide very effective thermal insulation across the upper part of the channel and hence allow the nutrient solution to be maintained at the correct temperature regardless of the ambient air temperatures surrounding the gully.  This insulating effect is greatest when the plants are small and highly sensitive to temperature variations.

(e)   As the plants develop and their roots elongate and increase in size, the tubular or part tubular side members can be progressively unrolled, thereby increasing the base width of the gully.  Thus more room is provided for the root structures to develop while a large measure of support and insulation continue to be provided until and unless the side members are completely unrolled.  The nutrient solution and the pressure from the developing roots assist the unrolling action, and the elastic memory of the plastics material tends to continue to centralise the flow.

(f)   The combination of centralised nutrient flow and gentle side support from the tubular side members enables the gully to cope satisfactorily with small bare rooted seedlings, and hence avoids the expense involved of growing plants to a larger size in some form of root support medium prior to positioning them in the gully.  By eliminating the need for a root support medium, the undesirable evaporative cooling from the root support medium is also eliminated.

(g)   The root system establishes itself part-way around the tube thereby providing firm anchorage for the plants. This is an important factor when plants are unsupported or in outdoor applications where they have to withstand strong winds or heavy rains.

According to a further feature of the present invention there is provided a method of hydroponic plant cultivation which comprises planting plants in a gully as hereinbefore defined, cultivating said plants and progressively unrolling said base and/or side members as the plants grow to increase the width of said base and/or to increase the height of said side members.

The method of the present invention may, for example, be effected using the nutrient-film technique, referred to herein, or by the use of a static system of hydroponic cultivation.

The invention will now be more particularly described by way of example only with reference to the accompanying drawings wherein:-

Figure 1 illustrates in cross-section a gully according to the present invention with the side members rolled into a tubular configuration;

Figure 2 illustrates in corss-section a gully according to the present invention with the side members rolled into a part tubular configuration;

Figure 3 illustrates the gully of Figure 1 or Figure 2 with the side members unrolled;

Figure 4 illustrates in cross-section a gully of known type;

Figures 5-8 illustrate alternative embodiments of the gully according to the invention;

Figures 9 and 10 illustrate in cross-section gullies according to the present invention shaped to accommodate heating or cooling pipes;

Figure 11 illustrates in cross-section a gully of the present invention shaped to provide a reservoir for nutrient solution;

Figure 12 illustrates in cross-section a gully of the present invention suitable for suspension above the ground;

Figure 13 illustrates in cross-section the formation of the gully of Figure 5; and

Figure 14 illustrates in perspective a guide for forming a gully according to the invention.

Considering now Figure 1, the gully is formed from a sheet of plastics material folded and rolled to provide a narrow base 1 and free edges 2 which are supported by the rolled side members 3. In this configuration the gully is suitable for supporting young plants having a small root system and little stability.

The embodiment of Figure 2, in which the base 1 is wide, illustrates the progressive unrolling of the side members as the plant grows. If desired, however, the gully may be initially formed in this configuration, such a configuration being suitable for more mature plants.

In Figure 3 the side members of Figures 1 and 2 have been unrolled to accommodate the root system of mature plants.

Figure 4 illustrates a known type of gully having a broad base 1 of non-adjustable width. The disadvantages of this construction have already been described.

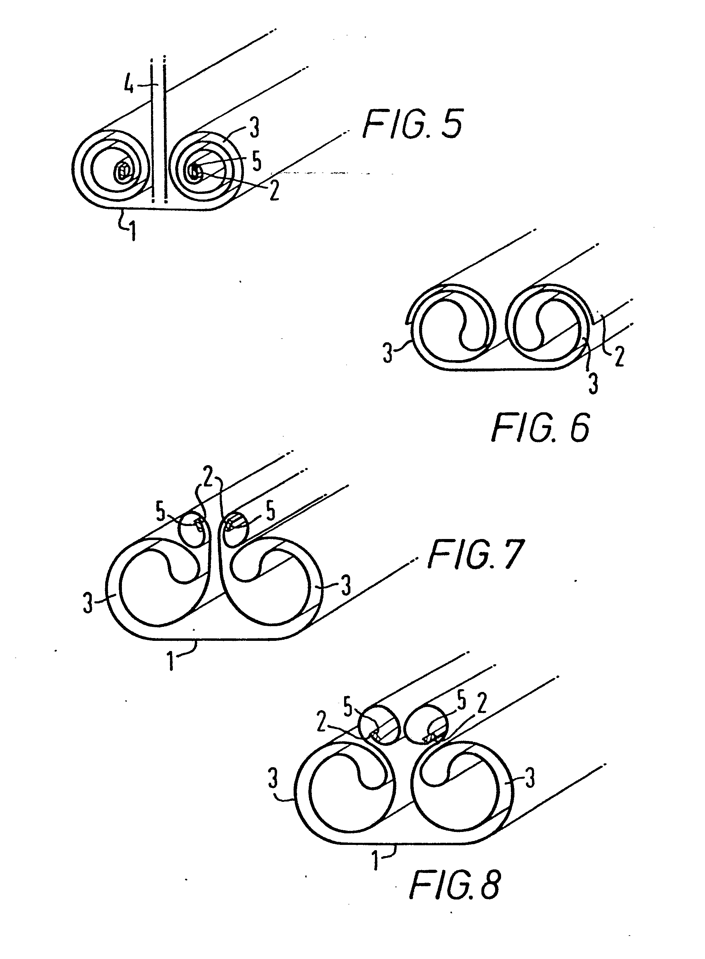

Figures 5 and 6 illustrate embodiments in which the free edges 2 are integral with the side members 3 which support the stem of a plant 4 directly. In Figure 5 the edges 2 are within the tubular side members and are secured to substantially rigid members 5. In Figure 6 although the free edges 2 are integral with the side members they lie on the periphery of the tubular configuration.

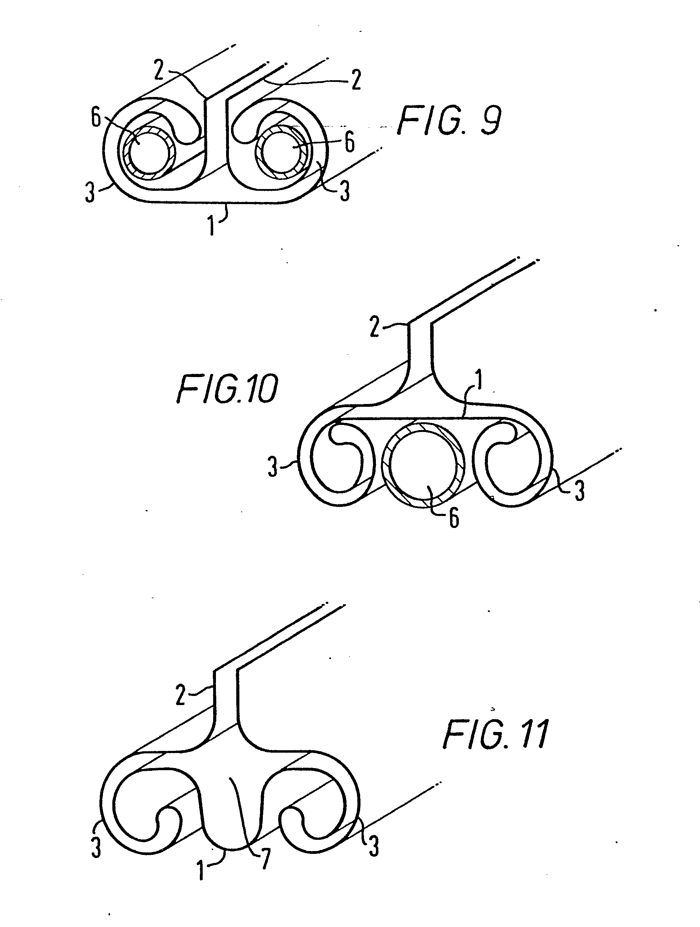

Figures 7 and 8 illustrate embodiments in which extended free edges 2 are left which are themselves rolled outwardly (Figure 7) or inwardly (Figure 8) to form further tubular configurations. The extreme ends of the free edges are secured to substantially rigid members 5 for maintaining the shape of the gully.

In Figure 9 the embodiment of Figure 2 is shown having heating or cooling pipes 6 running longitudinally through the part-tubular configuration of each side member. In Figure 10 the side members 3 are rolled downwardly into tubular configurations, the base 1 resting on a heating or cooling pipe 6. The embodiments of Figures 9 and 10 are particularly suitable for growing plants such as strawberries where the fruits benefit by being supported above the ground on a warm dry surface.

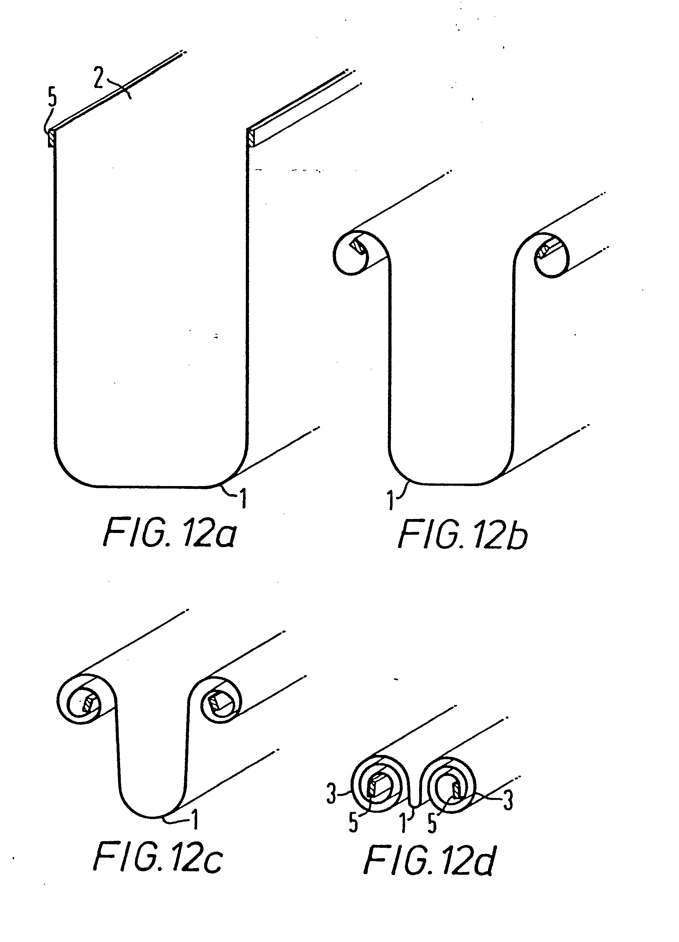

In Figure 11 the side members 3 are rolled downwardly into part-tubular configurations, a reservoir 7 being provided for nutrient solution. This embodiment is especially suitable for use with plants having relatively wide roots and stems which need support.

Figure 12 illustrates a gully of the present invention suitable for suspension above the ground. The free edges 2 are secured to substantially rigid members 5 from which the gully may be supported. The side members are rolled, creased or folded downwardly and progressively unrolled as the plant grows to show, for example, the configurations (c), (b) and (a) respectively.

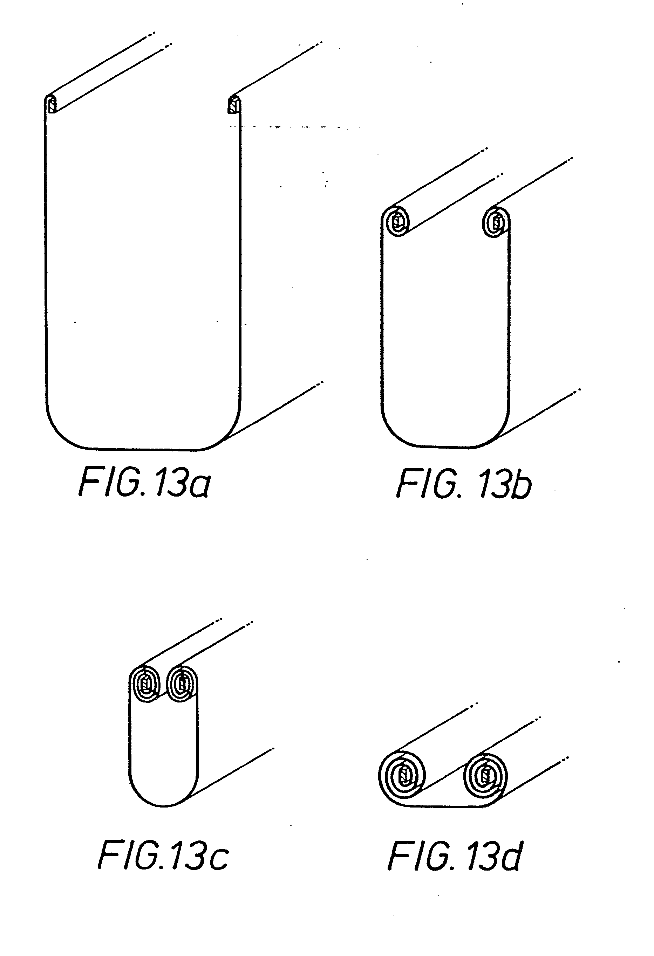

Figure 13 illustrates one way in which the gully of Figure 5 may be prepared. Thus the side members shown in (a) may be progressively rolled to obtain a gully as shown in (d) or in Figure 5. As the plants grow within the gully so the side members may be progressively unrolled.

In each of the above embodiments the sheet material may be a suitable plastics material such as black and white pigmented polyethylene.

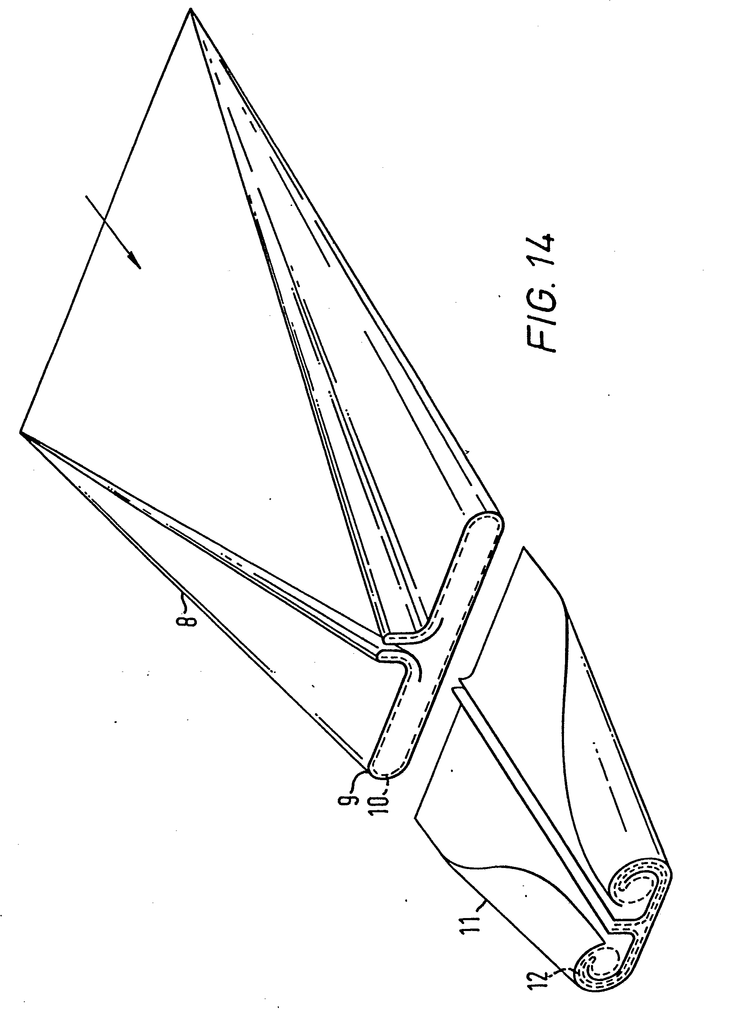

Finally, in Figure 14 there is shown a two-part guide for forming the gully of Figure 1. Plastics sheet enters the first part 8 of the guide in the direction of the arrow and on reaching the end 9 has the configuration 10 shown dotted. The second guide member 11 then receives the sheet emerging from guide 8 and causes the side members to be rolled into the configuration shown dotted at 12. The guides 8 and 11 can be made of sheet metal or rigid plastics material.

Claims

1. A gully, for hydroponic plant cultivation, of flexible sheet material shaped to form a base and side members to constrain a nutrient solution with which, in use, the roots of the plants come into contact, characterised in that

at least one of said base or side members is longitudinally rolled, creased or folded into a tubular or part-tubular configuration which may be progressively unrolled as the plants grow to increase the width of said base and/or the height of said side members.

2. A gully as claimed in claim 1 wherein at least one of said base members is longitudinally rolled or creased into a tubular or part-tubular configuration such that in use plants are supported by the said side members.

3. A gully as claimed in claim 2 wherein at least one of said base members is longitudinally rolled or creased upwardly.

4. A gully as claimed in claim 2 or claim 3 wherein at lease one of said side members is longitudinally rolled or creased into a tubular or part-tubular configuration.

5. A gully as claimed in claim 1, suitable for suspension above the ground, wherein at least one of said side members is rolled or creased into a tubular or part-tubular configuration, the edges of the flexible sheet material being secured to a substantially rigid member for suspension above the ground.

6. A gully as claimed in any one of the preceding claims wherein both of said base and/or side members are longitudinally rolled or creased into a tubular or part-tubular configuration to form a gully having a substantially symmetrical configuration.

7.    A gully as claimed in claim 1 wherein both of said side members are longitudinally rolled or creased into a tubular  configuration, such that in use portions of each of said side members bear against and support the plants.

8.    A gully as claimed in any one of the preceding claims having a configuration adapted to receive heating or cooling means  which in use serve to heat or cool the nutrient solution and/or plant roots.

9.    A gully as claimed in any one of the preceding claims wherein the configuration of the gully is such as to provide a reservoir for the nutrient solution.

10.    A method of hydroponic plant cultivation which comprises planting plants in a gully as claimed in any one of the preceding claims, cultivating said plants and progressively unrolling said base and/or side members as the plants grow to increase the width of said base and/or to increase the height of said  side members.

11.    Apparatus for the production of a gully as claimed in any one of claims 1 to 9 which comprises a guide or guides through which in use flexible sheet material may be drawn, to progressively conform the flexible sheet material into the configuration  of a gully as claimed in any one of claims 1 to 9.

0038709

1/6

FIG. 1

FIG. 2

FIG. 3

FIG. 4

FIG. 5

FIG. 6

FIG. 7

FIG. 8

0038709

*FIG. 9*

*FIG.10*

*FIG. 11*

FIG. 12a

FIG. 12b

FIG. 12c

FIG. 12d

0038709

FIG.13a

FIG. 13b

FIG.13c

FIG.13d

FIG. 14

**0038709**

European Patent
Office

**EUROPEAN SEARCH REPORT**

Application number

EP 81 30 1753

| Category | Citation of document with indication, where appropriate, of relevant passages | Relevant to claim |
|---|---|---|
| A | US - A - 3 744 183 (NAOE KATO) <br><br> * The whole document * <br><br> ---- | 1 |

**DOCUMENTS CONSIDERED TO BE RELEVANT**

**CLASSIFICATION OF THE APPLICATION (Int. Cl.³)**

A 01 G 31/02

**TECHNICAL FIELDS SEARCHED (Int. Cl.³)**

A 01 G 31/00
31/02
A 01 C 1/04

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 28-07-1981 | HERYGERS |

EPO Form 1503.1 06.78